# EUROPEAN PATENT APPLICATION

(11) **EP 3 522 550 A1**
(43) Date of publication of application: **07.08.2019**
(21) Application number: 18869472.3
(22) Date of filing: 06.02.2018
(51) Int. Cl.: H04N 21/439, H04N 21/45, H04N 21/485, H04N 21/422

(54) **TELEVISION VOICE INTERACTION METHOD, VOICE INTERACTION CONTROL DEVICE AND STORAGE MEDIUM**

(30) Priority: 26.10.2017 CN 201711030639
(71) Applicant: Shenzhen Skyworth-RGB Electronic Co., Ltd., Shenzhen, Guangdong 518057 (CN)
(72) Inventor: SHI, Bei, Shenzhen Guangdong 518057 (CN)
(74) Representative: Osterhoff, Utz
(86) International application number: PCT/CN2018/075391
(87) International publication number: WO 2019/080406

(57) **Abstract**

Disclosed are a voice interaction method, a voice interaction control device and a storage medium. The voice interaction method includes the following operations: acquiring voice information of a current user; determining a current user type according to the voice information and a prestored voice information database; controlling operation of a television according to the current user type and a prestored mapping relation, in which the prestored mapping relation includes a corresponding relation between a user type and a corresponding preset use habit. Through the technical solution of the present application, personalized customization can be provided by the television according to any current user type without prestoring operation by the user, simplifying the operation of the user and enlarging the applicable use condition for personalized customization, and improving intelligence of the television.

## Description

### TECHNICAL FIELD

The present application relates to the technical field of television, in particular to a voice interaction method, a voice interaction control device, and a storage medium for television.

### BACKGROUND

With the development of science and technology, televisions have become increasingly intelligent. As a family-based device, televisions are facing the problem that one device is used by several users. In order to improve the intelligence of television, it need to determine characteristics of current television users, and to provide personalized customization according to their preferences and habits, and to provide truly needs to the users.

At present, to achieve the aforementioned purpose, several user accounts are set to distinguish the characteristics of different users, but this requires users to register in advance and to switch accounts manually. The data of each accounts is mutually independent with no possibility of integration. Additionally, some collects in advance the voiceprint of the user, and associate the voiceprint with the user account number or directly with the user information. When the user uses the television, various parameters of the television are set according to the preferences and habits of the current user obtained by the voiceprint of the current user, so as to meet the personalized demands of different users. However, with regard this, on the one hand, the user needs to bind the voiceprint with his own information in advance, in which operation is cumbersome. On the other hand, it can only satisfy the personalized demands of prestored individual users, and cannot meet the personalized use demand of the current users who are non-stored users.

The aforementioned content is only to assist understanding of the technical solution of the present application, and does not constitute an admission of above as the prior art.

### SUMMARY

The present application aims mainly to provide a voice interaction method for television, to simplify the operation when offering personalized customization for the user, enlarge the applicable condition for the personalized customization, and improve the intelligence degree of the television.

In order to achieve the aforementioned objective, the present application provides a voice interaction method for television, which includes the following operations:
acquiring voice information of a current user;
determining a current user type according to the voice information and prestored voice information database;
controlling operation of the television according to the current user type and a prestored mapping relation; the prestored mapping relation comprises a corresponding relation between a user type and a corresponding preset use habit.

Preferably, the operation of determining a current user type according to the voice information and prestored voice information database includes:
extracting voiceprint feature information in the voice information;
determining the current user type according to the voiceprint feature information and prestored voiceprint database.

Preferably, the voice interaction method for the television further includes:
recognizing a voice command from the voice information;
controlling operation of the television according to the voice command.

Preferably, operation of controlling operation of the television according to the voice command includes:
controlling the operation of the television according to the user type and the voice command, when the voice command recognized from the voice information is related to the user type;
controlling independently and respectively the operation of the television according to the voice command and the user type, when the voice command recognized from the voice information is unrelated to the user type.

Preferably, the operation of determining the current user type according to the voiceprint feature information and prestored voiceprint database includes:
comparing similarity between the voiceprint feature information and voiceprint data in the prestored voice database;
acquiring voiceprint data with the similarity greater than or equal to a preset threshold value;
determining the current user type according to the acquired voiceprint data.

Preferably, the operation of determining the current user type according to the acquired voiceprint data includes:
taking the user type corresponding to the voiceprint data with a highest similarity as the current user type, when the acquired voiceprint data are plural and the plurality of the acquired voiceprint data correspond to different user types.

Preferably, the voice interaction method for the television further includes the following operations:
sending a prompting message to remind to input the voice information for a second time, when the similarity is less than the preset threshold value.

Preferably, the voice interaction method for the television further includes:
acquiring a television operation parameter corresponding to the current user;
updating the prestored mapping relation according to the television operation parameter.

Preferably, the operation of updating the prestored mapping relation according to the television operation parameter includes:
analyzing the television operation parameter;
updating the prestored mapping relation according to the analysis.

Preferably, the operation of updating the prestored mapping relation according to the television operation parameter includes:
acquiring occurrence frequency of a voiceprint feature information in a preset period;
updating the prestored voiceprint database and the prestored mapping relation, according to the voiceprint feature information and television operation parameter corresponding to the voiceprint feature information, when the occurrence frequency is greater than or equal to a preset frequency.

Preferably, the voice interaction method for the television further includes:
storing the voiceprint feature information of the current user into the prestored voiceprint database and making identity recognition correspondingly;
associating the identity recognition with a television operation parameter corresponding to the current user, and saving the television operation parameter into the prestored mapping relation.

Preferably, the operation of controlling operation of a television according to the current user type and a prestored mapping relation includes:
determining a television setting parameter or acquiring push content corresponding to the television setting parameter according to the current user type and the prestored mapping relation;
controlling operation of the television according to the setting parameters or the push content.

Preferably, the operation of controlling operation of a television according to the current user type and a prestored mapping relation includes:
acquiring correspondent push content according to the current user type and the prestored mapping relation;
controlling the television to play the push content.

In addition, in order to achieve the aforementioned objective, the present application further provides a voice interaction control device for television, wherein, the television voice interaction control device comprises a memory, a processor and a computer program stored on the memory and executable on the processor, the computer program implements the operations of the method described all above, when executed by the processor.

In addition, in order to achieve the aforementioned objective, the present application further provides a computer readable storage medium, wherein, the computer readable storage medium stores a voice interaction program for television, the operations of the voice interaction method for the television which are described all above are implemented, when the television voice interaction program is executed by a processor.

The embodiments of the present application provides a voice interaction method for television. The current user type is determined by the voice information of the current user of the television and a prestored voice information database. Since different user types correspond to different use habits, the use habits of the current user can be determined according to the prestored mapping relation. The operation of the television is controlled according to the use habits of the current user, and personalized customization of the television can be realized. In which, the determination of the current user type can be realized by establishing in advance a voice information database including voice information regarding different user types, the current user type can be determined without user's operation. Personalized customization can be realized in the voice information database for any user using the television, enlarging the applicable use condition for personalized customization, and improving intelligence of the television.

### BRIEF DESCRIPTION OF THE DRAWINGS

Fig. 1 is a system schematic diagram of hardware operating environment involved in an embodiment of the present application;
Fig. 2 is a first flow diagram of an embodiment of a voice interaction method for television according to the present application;
Fig. 3 is a second flow diagram of a voice interaction method for television according to an embodiment of the present application;
Fig. 4 is a third flow diagram of an embodiment of a voice interaction method for television according to the present application;
Fig. 5 is a fourth flow diagram of a voice interaction method for television according to an embodiment of the present application;
Fig. 6 is a fifth flow diagram of a voice interaction method for television according to an embodiment of the present application;
Fig. 7 is a sixth flow diagram of a voice interaction method for television according to an embodiment of the present application.

The implementation, functional features and advantages of the present application will be further described with reference to the accompanying drawings with the embodiments.

### DETAILED DESCRIPTION OF THE EMBODIMENTS

It should be understood that the specific embodiments described herein are only for the purpose of explaining the present application and are not intended to limit the present application.

The main technical solution of the present application is: acquiring voice information of a current user; determining a current user type according to the voice information and a prestored voice information database; controlling operation of a television according to the current user type and a prestored mapping relation, in which the prestored mapping relation includes a corresponding relation between a user type and a corresponding preset use habit.

Because in the prior art, users need to input information in advance and personalized customization can only be provided for the users who have input information in advance.

According to the technical solution provided in the present application, personalized customization can be provided by the television according to any current user type without prestoring operation by the user, simplifying the operation of the user and enlarging the applicable use condition for personalized customization, and improving intelligence of the television.

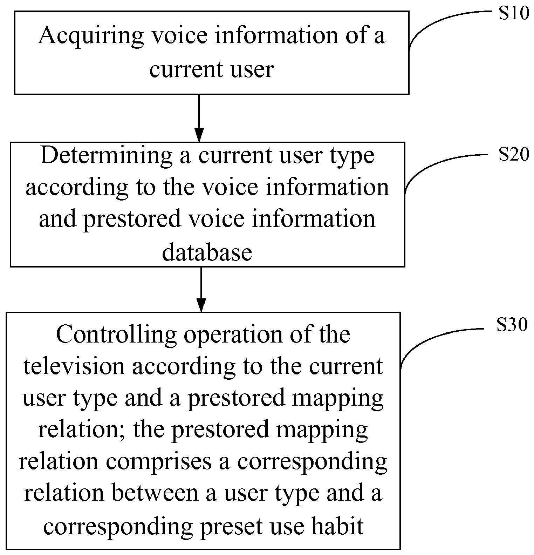

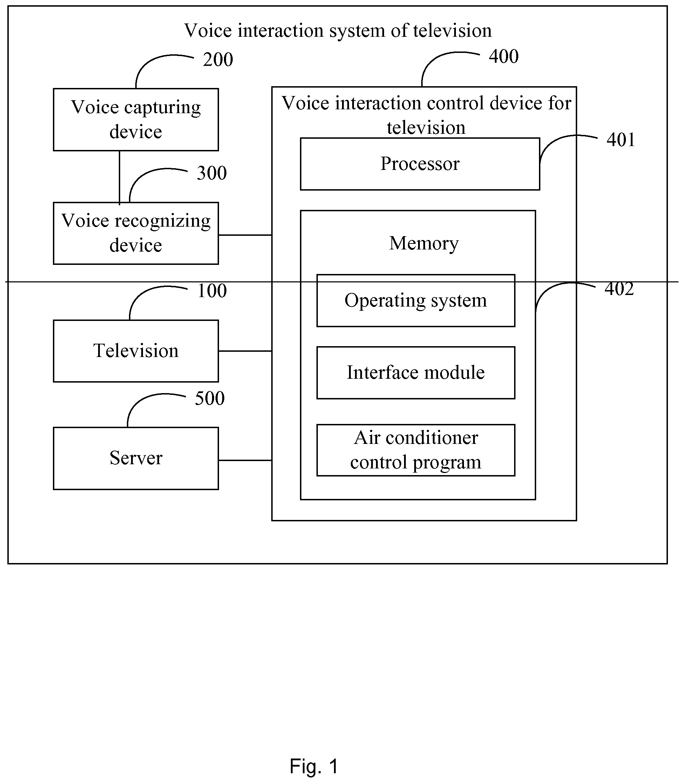

Referring to Fig. 1, which is a schematic diagram of hardware operating system involved in an embodiment of the present application.

The operating system of the embodiment of the present application can be a television, a terminal device such as a smart phone, a smart watch, a computer and the like which is connected with the television, or a playing system formed by the television and the terminal device and the like.

As shown in Fig. 1, the operating system may include a television 100, a voice capturing device 200, a voice recognizing device 300, a voice interaction control device for television 400, and a server 500. The above devices can be connected through wire or wireless communication.

The voice capturing device can specifically be a microphone and the like, and can also be a terminal device with voice capturing function such as a smart phone, a smart wearable device, an electronic and electrical device in the region where the television is located.

The voice recognizing device is a device with functions of processing voice information and extracting voice features, and can be used for recognizing voiceprints or voice commands from the voice information. The voice recognizing device can be a device independently set or a function module integrated on a processor in a television voice interactive control device.

The voice interaction control device for television may include a processor 401, such as a CPU, and a memory 402. The memory 402 may be a high-speed RAM memory or a non-volatile memory such as a disk memory. The memory 402 may alternatively be a storage device independent of the aforementioned processor 401. The memory 402 as a computer storage medium may include an operating system, a voice interaction program for television, an interface module, and the like.

The server can be a cloud server or a local server built in the television. The server can be used for voice recognition, and can also be used for providing related push content for the television according to the voice information of the user.

It would be understood by those skilled in the art that the terminal shown in Fig. 1 does not constitute a limitation to the terminal, which may include more or fewer components than shown, or some components may be combined, or different components arranged.

In the operating system shown in Fig. 1, the processor 401 can be used to call the voice interaction program for television stored in the memory 402 and to execute various operations in the voice interaction method for television in the following embodiments.

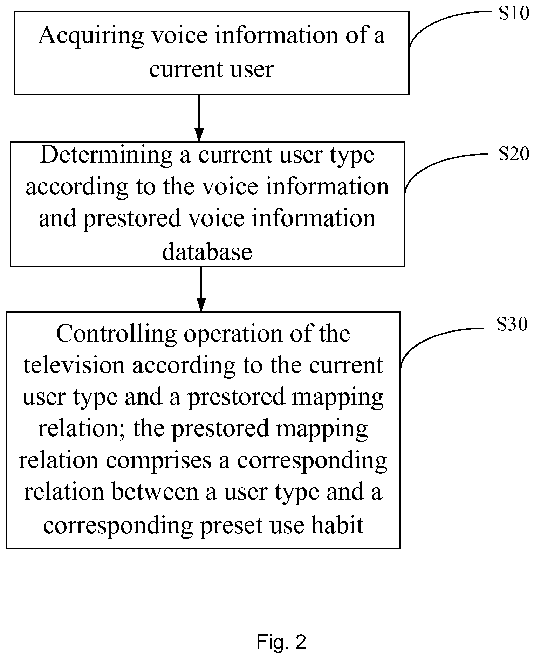

Referring to Fig. 2, an embodiment of the present application provides a voice interaction method for television, which includes:
Step S10, acquiring voice information of a current user;
   When the television is in a voice interaction state, the voice information of the current user using the television can be acquired in real time through the voice capturing device. The voice information is a voice fragment input by the user, and the voice information can specifically include voiceprint feature information, language type information (such as English, French, Mandarin Chinese, and the like), voice command information, etc. The voice capturing device can be internally installed on the television or fixedly installed in the area where the television is located, and can also be a mobile device independent of the television, such as a mobile phone, a smart watch and other mobile devices with voice capture function. Preferably, the voice capturing device can be set close to the current user who use the television, in an effect to obtain more accurate voice information. In which, when the television is in a voice interaction state, a user can control the operation of the television by sending voice information. The voice interaction state can be a default state of the television or can be started by a control command of the user.
Step 20, determining a current user type according to the voice information and prestored voice information database.

The prestored voice information database may include a plurality of user types set according to actual use demands and voice information data corresponding to each user type. When any user uses the television, the voice information of the current user of the television is matched with the voice information data in the prestored voice information database, and the user type corresponding to the voice information data successfully matched with the voice information is the current user type. The successfully matched voice information data can be voice information data consistent with the voice information, or voice information data with the highest similarity compared to the voice information, or voice information data with similarity reaching a preset threshold, etc., and can also be set according to actual conditions. If matching is unsuccessful, an approximate voice information can be determined from the prestored voice information database according to preset rules. And a prompt message can be sent to indicate the user to input voice information for a second time or the television is controlled to operate according to the default settings.

In which, the user types can be divided by one or more criteria such as gender (male or female), age (child, young, middle-aged, aged, etc.), number (single users or plural users), language used (Chinese, English, French, etc.) and the like. Preferably, in order to improve the adaptability of the prestored voice information database to different user types, the user types in the prestored voice information database can be as rich as possible.

The voice information data can be specifically voiceprint feature information data, language type information data and the like, which can be used for distinguishing user types. The corresponding voice information data can be specifically selected according to different recognition methods of voice information, types of voice information and the like. Voice information data corresponding to each user type can be obtained by analyzing or collecting a large amount of daily voice information data of users of that type.

In step S30, controlling operation of the television according to the current user type and a prestored mapping relation; the prestored mapping relation comprises a corresponding relation between a user type and a corresponding preset use habit.

The user types in the prestored mapping relation are consistent with the user types set in the prestored voice information database, and the preset use habits aforementioned are determined by analyzing a large number of daily television use habits of each type of users. The preset use habit corresponding to the current user type can be determined through the prestored mapping relation, and instructions can be generated correspondingly to control the operation of the television according to the preset use habit.

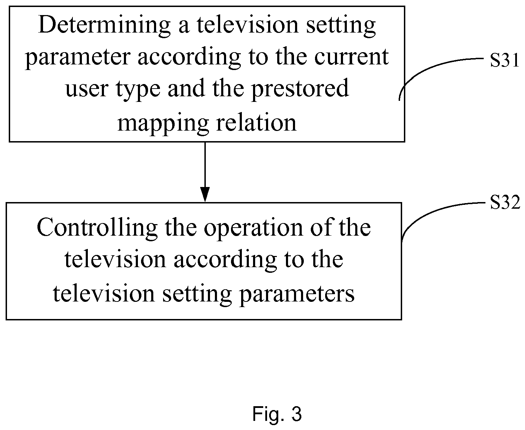

Specifically, referring to Fig. 3, the operation of controlling operation of a television according to the current user type and a prestored mapping relation includes:
Step S31, determining a television setting parameter according to the current user type and the prestored mapping relation;
Step S32, controlling the operation of the television according to the television setting parameters.

The preset use habit can specifically be the television setting parameters commonly used by users, such as image mode setting parameters, sound mode setting parameters, language mode setting parameters, etc. In the prestored mapping relation, different user types correspond to different television setting parameters. According to the current user type and the prestored mapping relation, the corresponding television setting parameters can be determined. And the television operation parameters currently run can be adjusted according to the determined setting parameters, so that the television can meet the personalized demands of the current user. For example, the voice information database includes the classification of users who use Chinese and users who use English. In the prestored mapping relation, users using Chinese corresponds to the language mode setting parameters for displaying Chinese, and users using English corresponds to the language mode setting parameters for displaying English. If the current user is a user who uses English, the television operation is controlled according to the setting parameters in the prestored mapping relation to display the television interface in English.

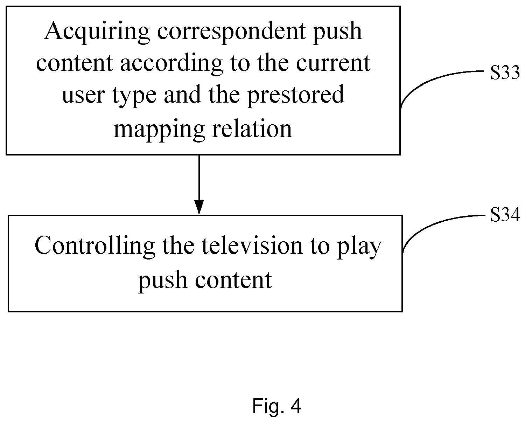

In addition, referring to Fig. 4, the operation of controlling operation of a television according to the current user type and a prestored mapping relation may further include:
Step S33, acquiring correspondent push content according to the current user type and the prestored mapping relation.
Step S34: controlling the television to play push content.

The preset use habit can also be specifically the type of television broadcast content or display interface preferred by the user, such as home page, UI style, application preference, program type, etc. In the prestored mapping relation, different user types correspond to different user preferred content or interface types. According to the current user type and the prestored mapping relation, the corresponding preferred content or interface type can be determined, based on which, the corresponding recommended program list, recommended home page, recommended content, recommended UI style and the like are obtained from a local database or a cloud server is played in the television as pushed content. For example, the voice information database includes classifications of adult users and juvenile users. And in the prestored mapping relation, the preferred UI style corresponding to the adult users is a simple style, while the preferred UI style corresponding to the juvenile users is a cartoon style. If the current user is a juvenile user, the UI style conforming to the preferred UI style is obtained in the prestored mapping relation for displaying by the television. The acquired UI styles can be one or more, one of which can be directly displayed and played by the processor, or recommendation information can be generated for the user to select. The UI style of the current television is adjusted only after the user confirms.

In the embodiment of the present application, the current user type is determined by the voice information of the current user of the television and a prestored voice information database. Since different user types correspond to different use habits, the use habits of the current user can be determined according to the prestored mapping relation. The operation of the television is controlled according to the use habits of the current user, and personalized customization of the television can be realized. In which, the determination of the current user type can be realized by establishing in advance a voice information database including voice information regarding different user types, the current user type can be determined without user's operation. Personalized customization can be realized in the voice information database for any user using the television, enlarging the applicable use condition for personalized customization, and improving intelligence of the television.

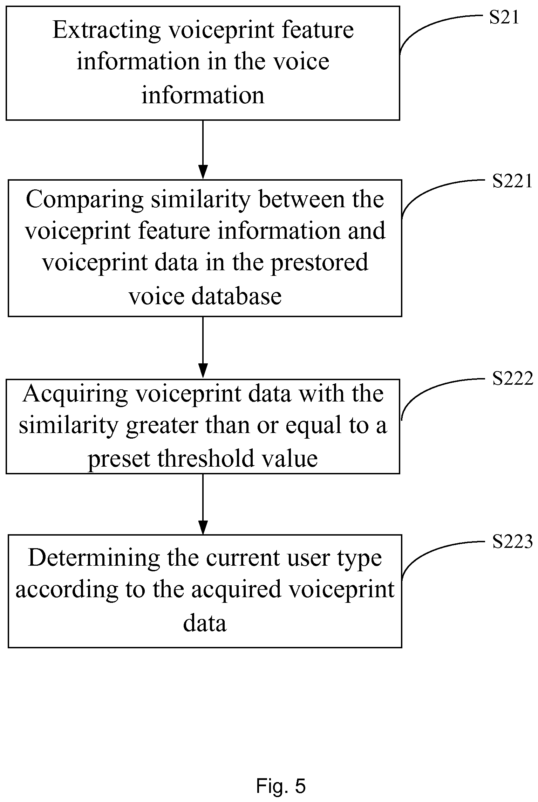

Due to the difference of voiceprint in human voice, the age group, gender and other characteristics of human can be distinguished through the voiceprint. The current user type can be preferably determined through the voiceprint. Specifically, referring to Fig. 5, the operation of determining a current user type according to the voice information and prestored voice information database includes:
Step S21, extracting voiceprint feature information in the voice information.
Step S22, determining the current user type according to the voiceprint feature information and prestored voiceprint database.

The prestored voice information database can form prestored voiceprint database by storing different user types and their corresponding voiceprint data. In which, there can be plural voiceprint data stored for a same user type, and the number of voiceprint data can be as large as possible, so as to improve the accuracy of determining user types through prestored voiceprint database. Specifically, the operation of determining the current user type according to the voiceprint feature information and the prestored voiceprint database includes:
Step S221, comparing similarity between the voiceprint feature information and voiceprint data in the prestored voice database.
Step S222, acquiring voiceprint data with the similarity greater than or equal to a preset threshold value.
Step S223, determining the current user type according to the acquired voiceprint data.

Voiceprint feature information is extracted in voice information of the current user. comparing the voiceprint feature information of the current user with voiceprint data in a prestored voiceprint database to obtain the similarity between each voiceprint data and the voiceprint feature information, when the similarity is greater than or equal to a preset threshold, the user type corresponding to the voiceprint data can be taken as the current user type, and when there are multiple voiceprint data satisfying the similarity greater than or equal to a preset threshold and the voiceprint data corresponds to different user types, the user type corresponding to the voiceprint data with the highest similarity can be taken as the current user type; When the similarity is less than the preset threshold, the prestored voice database can not be considered to determine the current user type, and a prompt message can be sent to prompt the user to input voice information again or control the television to operate according to the default setting. comparing the voiceprint feature information of the current user with voiceprint data in a prestored voiceprint database to obtain similarity between each voiceprint data and the voiceprint feature information. When the similarity is greater than or equal to a preset threshold, the user type corresponding to the voiceprint data can be taken as the current user type. When there are several voiceprint data satisfying the similarity greater than or equal to a preset threshold and these voiceprint data correspond to different user types, the user type which corresponding to the voiceprint data which has the highest similarity can be taken as the current user type. When the similarity is less than the preset threshold, the prestored voice database can not be considered to determine the current user type. A prompt message can be sent to prompt the user to input voice information for a second time or control the television to operate according to the default setting.

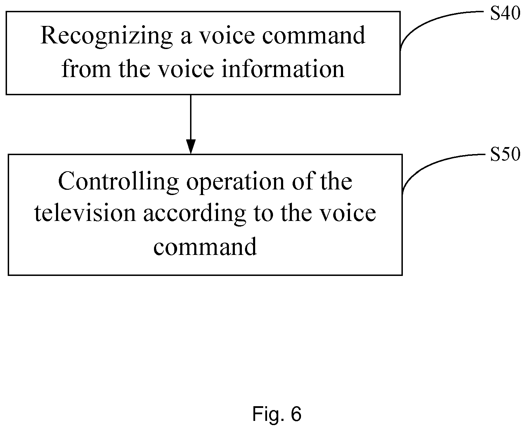

Further, referring to Fig. 6, the voice interaction method for television in the present embodiment further includes:
Step S40, recognizing a voice command from the voice information.
Step S50, controlling operation of the television according to the voice command.

Besides determining the current user type through the voice information of the current user and controlling the operation of the television according to the current user type, the user can also issue voice information containing voice commands on this basis. After the voice information of the current user is acquired, it can be recognized whether the voice information of the current user contains a voice command for operating the television. If yes, the operation of the television is controlled according to the recognized voice command in combination with the current user type. If no, the operation of the television is controlled only according to the current user type. When the voice information is recognized to include voice commands related to user types such as "search for film hits", the television can be specifically controlled to obtain eligible films from the cloud server. And on the basis of the film hits obtained by the television, the obtained films are screened or arranged according to the current user type before displayed. If the current user type is an adult male, action films, suspense films and the like can be recommended, and the action films and suspense films are preferentially displayed. If the current user type is a juvenile, the obtained film can be filtered and displayed according to the film grade and age, so as to avoid feeding back the unsuitable content for the juvenile. When it is recognized that the voice command in the voice information is not related to the user type, such as " increase volume", the television can independently and respectively control the operation of the television according to the voice command and the user type.

According to the above manner, when a user sends out a voice information, the television can meet diversified demands of the user and further improve the intelligence of the television.

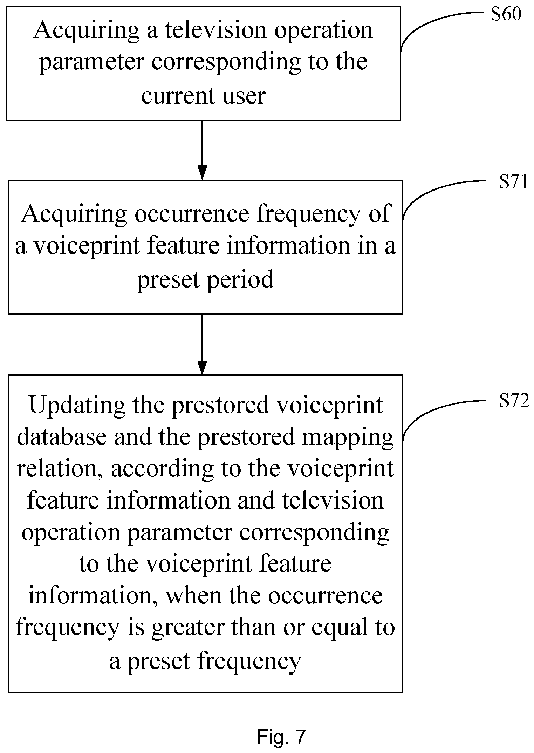

Further, referring to Fig. 7, the voice interaction method for television in the present embodiment further includes:
Step S60, acquiring a television operation parameter corresponding to the current user.
Step S70, updating the prestored mapping relation according to the television operation parameter.

After the current user type is determined and the operation of the television is controlled according to the current user type, the user can select and set the television operation parameters according to his own requirements. And the television operates according to the selection and setting of the user. The television operation parameters can be recorded during the use by the user type. The occurrence frequency, data type and the like of the television operation parameters can be analyzed, and the prestored mapping relation is updated according to the analysis. Specifically, the television operation parameters with the highest frequency can be stored into the prestored mapping relation as the television use habits of the user type. In which, the operation parameters of the television can specifically be UI style, home page type, type of play content and other parameters selected and set by the user when the television is operated. In the above manner, preset use habits can be continuously optimized corresponding to various user types in the prestored mapping relation, so that the operation of the television further meets the personalized demands of the current user type.

In addition to updating the prestored mapping relation, the voiceprint feature information of the current user can also be stored as voiceprint data into the prestored voiceprint database and used as the corresponding recognition. The identity recognition and the television operation parameters corresponding to the user can be associated and stored in a prestored mapping relation. When a user uses a television, if the prestored voiceprint database includes voiceprint data consistent with voiceprint feature information, the identity of the current user can be confirmed according to the identity recognition. And the corresponding television operation parameters can be obtained through prestored mapping relation to control the operation of the television. If there is no voiceprint data consistent with voiceprint feature information in the prestored voiceprint database, the current user type can be confirmed by matching the voiceprint data through the default rules. In the above manner, data in the prestored voiceprint database and the preset mapping relation can be continuously optimized during the use, and the intelligence and accuracy can be improved when the television carries out personalized customization for the user.

Specifically, the operation of updating the prestored mapping relation according to the television operation parameter includes:
Step 71, acquiring occurrence frequency of a voiceprint feature information in a preset period;
Step 72, updating the prestored voiceprint database and the prestored mapping relation, according to the voiceprint feature information and television operation parameter corresponding to the voiceprint feature information, when the occurrence frequency is greater than or equal to a preset frequency.

On the basis of the above, the occurrence frequency can be obtained of voiceprint feature information of a same user in a preset period. The occurrence frequency can be time, number of times, etc. When the frequency is greater than or equal to the preset frequency, the voiceprint feature information of the user and the corresponding television operation parameters are updated into the prestored voiceprint database and prestored mapping relation. Otherwise, no update will be made. In which, the preset period and preset frequency can be set according to actual demands. In this way, the accuracy can be improved of the prestored data in the prestored voiceprint database and the prestored mapping relation, thus improving the applicability and accuracy of personalized demands of television users, avoiding the adverse experience caused by accidental user operations and frequent replacement.

In addition, the embodiment of the present application also provides a computer readable storage medium, which stores a voice interaction program for television, and the control program is executed by the processor with the operations of the voice interaction method for television.

It should be noted that in this document, the terms "comprising" "including" or any other variation thereof are intended to cover a non-exclusive inclusion, such that a process, method, article, or system that includes a list of elements includes not only those elements but also other elements not expressly listed, or elements inherent to such process, method, article, or system. Without further restrictions, an element defined by the statement " includes an" does not exclude the presence of another identical element in a process, method, article, or system including the element.

The aforementioned serial numbers regarding the embodiments of the present application are for description only and do not represent the superiority and inferiority of the embodiments.

From the above description of the embodiments, those skilled in the art can clearly understand that the method of the above embodiments can be implemented by means of software plus necessary general-purpose hardware platforms. Of course, it can also be implemented by means of hardware, but in many cases the former is a better embodiment. Based on this understanding, the technical solution of the present application can be embodied in the form of a software product, which is stored in a storage medium (such as ROM/RAM, magnetic disk, optical disk) as described above, and includes several instructions to cause a terminal device (which can be a mobile phone, a computer, a server, an air conditioner, or a network device, etc.) to perform the methods described in various embodiments of the present application.

The above is only the preferred embodiment of the present application and is not therefore limiting the scope of the present application. Any equivalent structure or process change made by using the contents of the present specification and drawings, or directly or indirectly applied in other related technical fields, shall be included in the protection scope of the present application.

## Claims

1. A voice interaction method for television, **characterized in that**, the voice interaction method comprises:
acquiring voice information of a current user;
determining a current user type according to the voice information and
prestored voice information database;
controlling operation of the television according to the current user type and a prestored mapping relation; the prestored mapping relation comprises a corresponding relation between a user type and a preset use habit corresponding to the user type.

2. The method of claim 1, **characterized in that**, the operation of determining a current user type according to the voice information and prestored voice information database comprises:
extracting voiceprint feature information from the voice information;
determining the current user type according to the voiceprint feature information and the prestored voiceprint database.

3. The method of claim 2, **characterized in that**, the method further comprises:
recognizing a voice command from the voice information; and
controlling operation of the television according to the voice command.

4. The method of claim 3, **characterized in that**, the operation of controlling operation of the television according to the voice command comprises:
controlling the operation of the television according to the user type and the voice command, when recognizing that the voice information comprises voice command related to the user type;
respectively controlling the operation of the television independently according to the voice command and the user type, when the voice command recognized from the voice information is unrelated to the user type.

5. The method of claim 3, **characterized in that**, the operation of determining the current user type according to the voiceprint feature information and the prestored voiceprint database comprises:
comparing similarity between the voiceprint feature information and voiceprint data in the prestored voice database;
acquiring voiceprint data with the similarity greater than or equal to a preset threshold value;
determining the current user type according to the acquired voiceprint data.

6. The method of claim 5, **characterized in that**, the operation of determining the current user type according to the acquired voiceprint data comprises:
taking the user type corresponding to the voiceprint data with a highest similarity as the current user type, when the acquired voiceprint data are plural and the plurality of the acquired voiceprint data correspond to different user types.

7. The method of claim 5, **characterized in that**, the method further comprises the following operations:
sending a prompting message to remind to input the voice information for a second time, when the similarity is lower than the preset threshold value.

8. The method of claim 3, **characterized in that**, the method further comprises:
acquiring a television operation parameter corresponding to the current user; and
updating the prestored mapping relation according to the television operation parameter.

9. The method of claim 8, **characterized in that**, the operation of updating the prestored mapping relation according to the television operation parameter comprises:
analyzing the television operation parameter; and
updating the prestored mapping relation according to the analysis.

10. The method of claim 8, **characterized in that**, the operation of updating the prestored mapping relation according to the television operation parameter comprises:
acquiring occurrence frequency of the voiceprint feature information in a preset period;
updating the prestored voiceprint database and the prestored mapping relation, according to the voiceprint feature information and the television operation parameter corresponding to the voiceprint feature information, when the occurrence frequency is greater than or equal to a preset frequency.

11. The method of claim 3, **characterized in that**, the method further comprises:
storing the voiceprint feature information of the current user into the prestored voiceprint database and making identity recognition correspondingly;
linking the identity recognition and television operation parameter corresponding to the current user, and saving the television operation parameter into the prestored mapping relation.

12. The method of claim 1, **characterized in that**, the operation of controlling operation of the television according to the current user type and a prestored mapping relation comprises:
determining a television setting parameter or acquiring push content corresponding to the television setting parameter according to the current user type and the prestored mapping relation;
controlling operation of the television according to the setting parameters or the push content.

13. The method of claim 1, **characterized in that**, the operation of controlling operation of the television according to the current user type and a prestored mapping relation comprises:
acquiring corresponding push content according to the current user type and the prestored mapping relation; and
controlling the television to play the push content.

14. A voice interaction control device for television, **characterized in that**, the television voice interaction control device comprises a memory, a processor, and a computer program stored on the memory and executable on the processor, the computer program when being executed by the processor implements the operations of the voice interaction method described above.

15. A computer readable storage medium, **characterized in that**, the computer readable storage medium stores a television voice interaction program, the television voice interaction program when being executed by a processor implements, the operations described above.
